# EUROPÄISCHE PATENTSCHRIFT

(11) **EP 1 591 583 B1**
(45) Veröffentlichungstag und Bekanntmachung des Hinweises auf die Patenterteilung: **19.09.2007**
(21) Anmeldenummer: 05005208.3
(22) Anmeldetag: 10.03.2005
(51) Int. Cl.: D21B 1/32, D21F 1/70

(54) **Verfahren zur Flotation von Störstoffen aus einer wässrigen Papierfasersuspension**
Process for removing impurities by flotation from an aqueous fibrous suspension
Procédé de flottation pour éliminer des contaminants d'une suspension aqueuse de fibres

(30) Priorität: 26.04.2004 DE 102004020339
(43) Veröffentlichungstag der Anmeldung: 02.11.2005
(73) Patentinhaber: Voith Patent GmbH, 89522 Heidenheim (DE)
(72) Erfinder: Hess, Harald, 88287 Grünkraut (DE); Britz, Herbert, 88250 Weingarten (DE); Dreyer, Axel, 88212 Ravensburg (DE); Kemper, Martin, 88250 Weingarten (DE)

(56) Entgegenhaltungen:
- EP-A- 0 349 806
- EP-A- 1 388 370
- DE-A- 1 517 227
- US-B2- 6 475 337
- US-E- R E36 424

## Beschreibung

Die Erfindung betrifft ein Verfahren zur Flotation von Störstoffen aus einer wässrigen Papierfasersuspension gemäß dem Oberbegriff des Anspruchs 1. Solches Verfahren ist aus der DE 1 517 227 A bekannt.

Verfahren der genannten Art werden verwendet, um aus einer wässrigen Papierfasersuspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Papierfasersuspension, in der die Druckfarbenpartikel bereits von Fasern abgelöst sind, so dass sie sich ausflotieren lassen. Der hier beschriebene Flotationsvorgang nutzt die Unterschiede zwischen Faserstoff und unerwünschten Feststoffteilchen in der Art, dass der Faserstoff auf Grund seiner Hydrophilie in der Papierfasersuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Papierfasersuspensionen verwendet.

Anlagen, die dazu dienen, das Flotationsverfahren der genannten Art durchzuführen, bestehen aus mehreren Flotationszellen, das sind Apparaturen mit einem Behälter, in dem ein Flotationsschritt durchgeführt wird. Eine Flotationszelle wird im Allgemeinen durch einen Zulauf mit der Papierfasersuspension versorgt. In der Zelle bildet sich ein Flotationsschaum, der z.B. über ein Schaumwehr in eine Schaumrinne abfließen kann. Auf Grund der schon beschriebenen Mechanismen führt der Flotationsschaum einen Großteil der Störstoffe mit ab. Gemäß EP 1 124 001 A2 kann die gereinigte Suspension, also der Gutstoff einer Flotationszelle durch eine Öffnung direkt in die stromabwärts folgende benachbarte Zelle fließen, wobei die Füllstandsdifferenz als Triebkraft ausreicht. Der Gutstoff kann aber auch am Boden der Flotationszelle ausgeleitet und via Pumpe in die nächste, also stromabwärtige Zelle eingeführt werden. Eine solche Fahrweise wird z.B. beschrieben im Fachaufsatz von Herbert Britz, "Flotationsdeinking - eine Schlüsseltechnologie für Weiße und Sauberkeit" in "Das Papier", Heft 10, 1997, Seiten 514 bis 519.

Bei einer solchen aus mehreren Zellen bestehenden Anlage wird also die zu reinigende Papierfasersuspension nacheinander durch eine Mehrzahl von Flotationszellen hindurchgeleitet, wobei ihre Reinheit von Zelle zu Zelle zunimmt. Üblicherweise sagt man, dass die Flotationszellen, die in einer solchen Funktion zusammengefasst sind, zu einer einzigen Flotationsstufe gehören. Eine zweite Flotationsstufe ("Sekundärstufe") kann zweckmäßig sein, um den in der ersten Flotationsstufe gesammelten Flotationsschaum erneut zu flotieren, was insbesondere den Faserverlust des Verfahrens reduziert, ohne die Qualität des gereinigten Stoffes zu verschlechtern.

Es ist üblich, die Wirkung des Flotationsverfahrens durch Zugabe von Chemikalien zu verbessern. Diese haben mehrere chemische Komponenten, die Einfluss nehmen auf:
- Die Ablösung der Störstoffpartikel von den Fasern,
- Größe und Verteilung der Störstoffpartikel in der Faserstoffsuspension,
- Bildung und Stabilität des Flotationsschaumes,
- Haftkräfte zwischen Gasblasen und Feststoffen;
- Quellung der Papierfasern.

Chemikalien dieser Art sind also Mischungen von verschiedenen chemischen Komponenten, und ihre Rezepturen sind bekannt. Sie werden zumeist bei der Auflösung zugegeben, also dem Verfahrensschritt, in dem aus dem angelieferten Zellstoff oder Papier eine wässrige Papierfasersuspension erzeugt wird.

Der Erfindung liegt die Aufgabe zu Grunde, die Störstoffentfernung bei Flotationsverfahren der genannten Art weiter zu verbessern. Insbesondere sollen Druckfarbenpartikel und klebende Störstoffe (Stickies) auch unterschiedlicher Größe bei guter Faserausbeute optimal ausgeschieden werden.

Diese Aufgabe wird durch die Merkmale des Anspruchs 1 in vollem Umfang gelöst.

Durch die beschriebenen Merkmale ist es möglich, mit einfachen Mitteln dafür zu sorgen, dass in allen Flotationszellen günstige Verfahrensbedingungen herrschen. So können die zuerst (z.B. im Stofflöser) zugegebenen Chemikalien einen höheren Anteil der als Sammler wirkenden Komponente aufweisen. Auf diese Weise werden im Anfangsstadium des Flotationsverfahrens die besonders kleinen, eventuell dispergierten Störstoffpartikel optimal entfernt. Die in einem späteren Stadium, z.B. in der dritten von fünf Flotationszellen zugegebenen Chemikalien enthalten dann höchstens einen geringen Sammleranteil und dafür eine höhere Dosis an Schäumern. Da diese Komponente für eine bessere Schaumbildung sorgt, wird das Ausflotieren größerer Partikel begünstigt. Die gelegentlich nachteilige Wirkung der Schäumer, das Zerkleinern und Dispergieren von Störstoffpartikeln spielt wegen der erwähnten Vorbehandlung nur noch eine geringe Rolle.

Die in die Flotationszellen eingegebenen Chemikalien können auch zellenspezifisch auf eine optimale Schaumbildung eingestellt werden.

Die Erfindung und ihre Vorteile werden erläutert an Hand von Zeichnungen. Dabei zeigen:
- Fig. 1: schematisch: Durchführung des Verfahrens am Beispiel einer aus 5 Flotationszellen bestehenden Flotationsstufe;
- Fig. 2: Schnitt durch eine Flotationszelle.

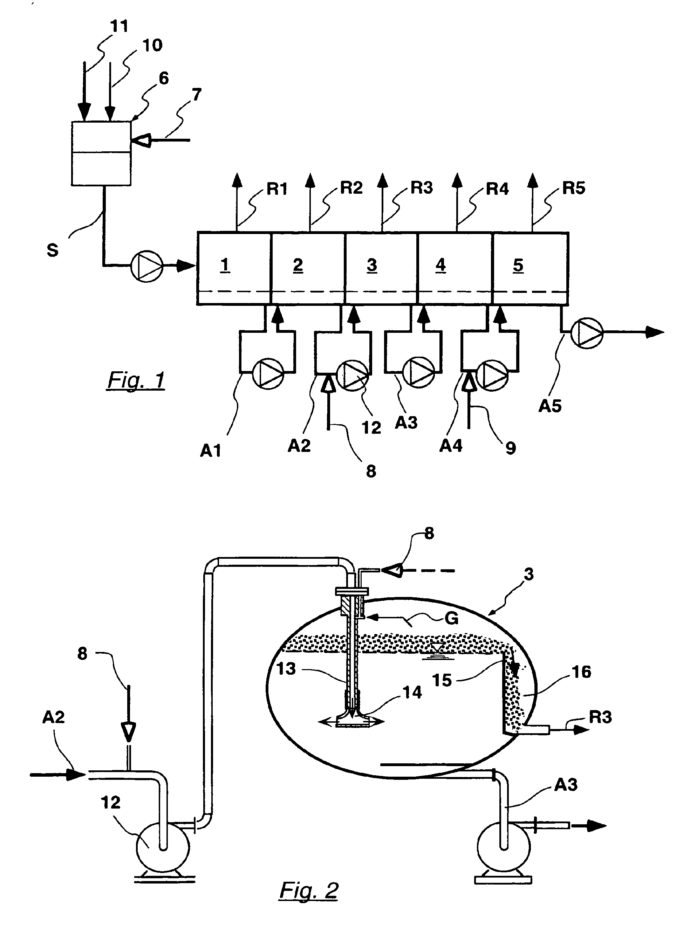

Die Fig. 1 zeigt ein Beispiel zur Durchführung des erfindungsgemäßen Verfahrens. Dabei wird aus Altpapier 11 und Wasser 10 die Papierfasersuspension S durch Auflösung 6, z.B. in einem Stofflöser oder in einer Auflösetrommel erzeugt. Fünf Flotationszellen 1 bis 5 sind zu einer Flotationsstufe zusammengeschaltet. Selbstverständlich kann die Anzahl der Flotationszellen variiert werden je nach den gestellten Anforderungen. Die einzelnen Flotationszellen sind so miteinander verbunden, dass die in die erste Flotationszelle 1 zugeführte Papierfasersuspension S nacheinander alle Flotationszellen durchströmt. Die gebildeten Gutstoffe A1 bis A4 werden in an sich bekannter Weise aus der entsprechenden Flotationszelle abgezogen und jeweils über eine Pumpe 12 der stromabwärts angeordneten nächsten Flotationszelle wieder zugeführt. Dabei erfolgt eine erneute Belüftung. Der aus der letzten Flotationszelle 5 abgezogene Gutstoff A5 ist weitgehend frei von flotierbaren Druckfarbenpartikeln und Klebeteilchen (stickies) und wird weiterverarbeitet.
Der mit Störstoff angereicherte Flotationsschaum R1 bis R5 der Flotationszellen fließt z.B. über eine hier nicht gezeigte Schaumrinne ab. In vielen Fällen wird er einer Sekundärflotation zugeführt, um die Faserausbeute zu verbessern. Solche Schaltungen sind an sich bekannt. Bei dem hier gezeigten Beispiel werden drei verschiedene Chemikalien 7 bzw. 8 bzw. 9 an verschiedenen Zugabestellen zudosiert. Die Zusammensetzung dieser Chemikalien ist unterschiedlich und auf die an der Zugabestelle herrschenden Anforderungen besonders abgestimmt.
Die Figur 1 soll lediglich die verfahrenstechnische Vorgehensweise erläutern, ohne z.B. die Form der Flotationszellen oder die Positionen der Zu- und Abläufe zu zeigen. Etwas genauer ist da, wenn auch immer noch ohne konstruktive Details dargestellt, die in Fig. 2 im Schnitt gezeigte Flotationszelle 3. Dabei entspricht der Querschnitt einem liegenden Oval, also einer oft verwendeten Bauform des Anmelders, die als EcoCell bezeichnet wird.

Die als Gutstoff A2 zuströmende Papierfasersuspension wird zunächst in ein Mischrohr 13 geführt. Dieses ist an seinem unteren Ende mit einem Umlenkstoßdiffusor 14 versehen, der die im Mischrohr 13 belüftete Suspension horizontal über 360° verteilt. Das Mischrohr 13 enthält einen Injektor, der das Gas G, im Allgemeinen Luft, aus dem oberen Bereich der Flotationszelle ansaugt. In anderen Fällen kann die zu reinigende Papierfasersuspension S aber auch direkt in die Flotationszelle geleitet werden und die Belüftung durch separaten rezirkulierten Teilstrom erfolgen. Die aufsteigenden, nicht dargestellten Luftblasen bilden an der Oberfläche der sich in der Flotationszelle 1 befindenden Papierfasersuspension den Flotationsschaum R3. Er kann dann durch eine Schaumrinne 16 abfließen, die mit einem höhenverstellbaren Wehr 15 versehen ist, das das Niveau in der Flotationszelle bestimmt. Der Akzept A3 der Flotationszelle 3 wird am Boden abgezogen und über eine weitere Pumpe zur nächsten stromabwärtigen - nicht gezeigten - Flotationszelle geführt. Gemäß dieser Fig. 2 ist die Zugabestelle für die Chemikalien 8 in der Saugleitung zur Pumpe 12, die den Gutstoff A2 der stromaufwärtigen Flotationszelle fördert. Eine andere Möglichkeit wäre die Zugabe direkt in das Mischrohr 13 oder in dessen Luftansaugung wie hier durch gestrichelten Pfeil gezeigt, wobei dann der Injektor auch zur Chemikalieneinmischung dient.

## Patentansprüche

1. Verfahren zur Entfernung von Störstoffen aus einer wässrigen Papierfasersuspension (S) mit Hilfe einer Flotationsanlage, die mehrere von der Papierfasersuspension (S) nacheinander durchströmte Flotationszellen (1, 2, 3, 4, 5) umfasst, wobei in den Flotationszellen (1, 2, 3, 4, 5) mit Hilfe von aufsteigenden Gasblasen jeweils ein mit Störstoffen angereicherter Flotationsschaum (R1, R2, R3, R4, R5) gebildet wird, der sich oberhalb der Papierfasersuspension ansammelt,
wodurch in den Flotationszellen (1, 2, 3, 4, 5) jeweils ein Gutstoffstrom (A1, A2, A3, A4, A5) gebildet wird, dessen Störstoffgehalt geringer ist als der im Zulaufstrom zu dieser Flotationszelle und
wobei zur Verbesserung der Flotationswirkung Chemikalien zugegeben werden,
**dadurch gekennzeichnet,**
**dass** die Chemikalien (7, 8, 9) der Papierfasersuspension (S, S') an mindestens zwei in Strömungsrichtung der Papierfasersuspension (S) hintereinander liegenden Zugabestellen zugegeben werden und dabei jeweils unterschiedliche Anteile an chemischen Komponenten aufweisen.

2. Verfahren nach Anspruch 1,
**dadurch gekennzeichnet,**
**dass** zwischen zwei Zugabestellen eine Belüftung der Papierfasersuspension (S) zur Bildung der Gasblasen erfolgt.

3. Verfahren nach Anspruch 2,
**dadurch gekennzeichnet,**
**dass** die erste Chemikalienzugabe vor oder während der Auflösung (6) erfolgt, bei der die wässrige Papierfasersuspension (S) hergestellt wird.

4. Verfahren nach Anspruch 2 oder 3,
**dadurch gekennzeichnet,**
**dass** eine Chemikalienzugabe, die nicht die erste ist, in einer stromabwärts der ersten Flotationszelle (1) angeordneten, spätestens in der letzten Flotationszelle (5) erfolgt.

5. Verfahren nach einem der voranstehenden Ansprüche,
**dadurch gekennzeichnet,**
**dass** eine chemische Komponente als Sammler wirkt.

6. Verfahren nach Anspruch 5,
**dadurch gekennzeichnet,**
**dass** die Sammler-Komponente Seife oder Fettsäure ist.

7. Verfahren nach einem der voranstehenden Ansprüche,
**dadurch gekennzeichnet,**
**dass** eine chemische Komponente die Bildung von Flotationsschaum verstärkt.

8. Verfahren nach Anspruch 7,
**dadurch gekennzeichnet,**
**dass** die die Bildung von Flotationsschaum verstärkende Komponente ein Tensid ist.

9. Verfahren nach einem der voranstehenden Ansprüche,
**dadurch gekennzeichnet,**
**dass** eine chemische Komponente das Ablösen der Störstoffe von den Papierfasern fördert.

10. Verfahren nach einem der voranstehenden Ansprüche,
**dadurch gekennzeichnet,**
**dass** eine chemische Komponente das Quellen der Papierfasern fördert.

11. Verfahren nach einem der voranstehenden Ansprüche,
**dadurch gekennzeichnet,**
**dass** mit den Chemikalien (8, 9) an einer stromabwärtigen Zugabestelle eine kleinere Menge von Sammler-Chemikalien zugegeben wird als mit den Chemikalien (7, 8) an einer dazu stromaufwärtigen Zugabestelle.

12. Verfahren nach einem der voranstehenden Ansprüche,
**dadurch gekennzeichnet,**
**dass** mit den Chemikalien (8, 9) an einer stromabwärtigen Zugabestelle eine größere Menge von Schäumern zugegeben wird als mit den Chemikalien (7, 8) an einer dazu stromaufwärtigen Zugabestelle.

13. Verfahren nach einem der voranstehenden Ansprüche,
**dadurch gekennzeichnet,**
**dass** aus der Flotationszelle (1, 2, 3, 4, 5) ein gereinigter Gutstoffstrom (A1, A2, A3, A4, A5) entnommen und via Pumpe (12) einer Flotationszelle (1, 2, 3, 4, 5) wieder zugeführt wird.

14. Verfahren nach Anspruch 13,
**dadurch gekennzeichnet,**
**dass** der Gutstoffstrom (A1, A2, A3, A4) erneut belüftet und in die Flotationszelle (1, 2, 3, 4, 5) zurückgeführt wird, aus der er entnommen wurde.

15. Verfahren nach Anspruch 13,
**dadurch gekennzeichnet,**
**dass** der Gutstoffstrom (A1, A2, A3, A4) einer Flotationszelle (1, 2, 3, 4) über eine Pumpe (12) in die stromabwärtige Flotationszelle (2, 3, 4, 5) gefördert wird.

16. Verfahren nach Anspruch 13, 14, oder 15,
**dadurch gekennzeichnet,**
**dass** die Flotationszelle (1, 2, 3, 4, 5) ein mit einem Injektor versehenes Mischrohr (13) aufweist und dass der Gutstoffstrom (A1, A2, A3, A4, A5) in das Mischrohr (13) eingeleitet wird.

17. Verfahren nach einem der voranstehenden Ansprüche,
**dadurch gekennzeichnet,**
**dass** die Flotationszellen mindestens zwei Flotationsstufen bilden und dass der in einer Flotationsstufe angesammelte Flotationsschaum in die nachfolgende Flotationsstufe geführt wird und dass auch in die zweite Flotationsstufe Chemikalien mit speziell auf diese Stufe abgestimmten Komponenten zugeben werden.

18. Verfahren nach einem der voranstehenden Ansprüche,
**dadurch gekennzeichnet,**
**dass** die zu entfernenden Störstoffe Druckfarbenpartikel sind.

19. Verfahren nach einem der voranstehenden Ansprüche,
**dadurch gekennzeichnet,**
**dass** die zu entfernenden Störstoffe klebende Partikel, d.h stickies, sind.

## Claims

1. Method for removing impurities from an aqueous paper fibre suspension (S) by means of a flotation plant which comprises a number of flotation cells (1, 2, 3, 4, 5) through which the paper fibre suspension (S) flows in sequence, a flotation foam (R1, R2, R3, R4, R5) enriched with impurities being formed in each flotation cell (1, 2, 3, 4, 5) by means of rising gas bubbles, which foam accumulates on top of the paper fibre suspension,
as a result of which a flow of accept (A1, A2, A3, A4, A5) is formed in each flotation cell (1, 2, 3, 4, 5), the impurities content of which is lower than that in the incoming flow into that flotation cell,
and
whereby chemicals are added in order to improve the flotation effect,
**characterised in that**
the chemicals (7, 8, 9) are added to the paper fibre suspension (S, S') at at least two addition points located one after the other in the direction of flow of the suspension (S), and in each case have different proportions of chemical components.

2. Method as in claim 1,
**characterised in that**
an aeration process of the paper fibre suspension (S) is carried out between two addition points in order to form the gas bubbles.

3. Method as in claim 2,
**characterised in that**
the first addition of chemicals takes place before or during the pulping process (6) in which the aqueous paper fibre suspension (S) is produced.

4. Method as in claim 2 or 3,
**characterised in that**
an addition of chemicals which is not the first such addition takes place in a flotation cell which is downstream of the first flotation cell (1), at the latest in the last flotation cell (5).

5. Method as in one of the preceding claims,
**characterised in that**
one chemical component acts as a collecting agent.

6. Method as in claim 5,
**characterised in that**
the collecting component is soap or fatty acid.

7. Method as in one of the preceding claims,
**characterised in that**
one chemical component increases the formation of flotation foam.

8. Method as in claim 7,
**characterised in that**
the component that increases the formation of flotation foam is a surfactant.

9. Method as in one of the preceding claims,
**characterised in that**
one chemical component aids the release of the impurities from the paper fibres.

10. Method as in one of the preceding claims,
**characterised in that**
one chemical component aids the swelling of the paper fibres.

11. Method as in one of the preceding claims,
**characterised in that**
a smaller quantity of collection chemicals is added with the chemicals (8, 9) at a downstream addition point than with the chemicals (7, 8) at an addition point that is upstream of this.

12. Method as in one of the preceding claims,
**characterised in that**
a larger quantity of foamers is added with the chemicals (8, 9) at a downstream addition point than with the chemicals (7, 8) at an addition point that is upstream of this.

13. Method as in one of the preceding claims,
**characterised in that**
a cleaned flow of accept (A1, A2, A3, A4, A5) is removed from the flotation cell (1, 2, 3, 4, 5) and is passed again to a flotation cell (1, 2, 3, 4, 5) via a pump (12).

14. Method as in claim 13,
**characterised in that**
the flow of accept (A1, A2, A3, A4) is aerated again and passed back into the flotation cell (1, 2, 3, 4, 5) from which it was removed.

15. Method as in claim 13,
**characterised in that**
the flow of accept (A1, A2, A3, A4) from one flotation cell (1, 2, 3, 4) is moved to the downstream flotation cell (2, 3, 4, 5) by means of a pump (12).

16. Method as in claim 13, 14 or 15,
**characterised in that**
the flotation cell (1, 2, 3, 4, 5) has a mixer tube (13) fitted with an injector, and **in that** the flow of accept (A1, A2, A3, A4, A5) is passed into the mixer tube (13).

17. Method as in one of the preceding claims,
**characterised in that**
the flotation cells form at least two flotation stages, and **in that** the flotation foam collected in one flotation stage is passed to the next flotation stage, and **in that**, at the second flotation stage, chemicals are added which have components that are specifically intended for this stage.

18. Method as in one of the preceding claims,
**characterised in that**
the impurities that are to be removed are particles of ink.

19. Method as in one of the preceding claims,
**characterised in that**
the impurities that are to be removed are adhesive particles (stickies).

## Revendications

1. Procédé d'élimination de substances parasites d'une suspension aqueuse (S) de fibres de papier, à l'aide d'une installation de flottation comprenant plusieurs cellules de flottation (1, 2, 3, 4, 5) parcourues, en succession, par ladite suspension (S) de fibres de papier, sachant qu'il est formé dans lesdites cellules de flottation (1, 2, 3, 4, 5), à l'aide de bulles gazeuses montantes, une mousse respective de flottation (R1, R2, R3, R4, R5) enrichie en substances parasites et s'accumulant au-dessus de la suspension de fibres de papier,
ce qui engendre, dans les cellules de flottation (1, 2, 3, 4, 5), un flux respectif de matière fine (A1, A2, A3, A4, A5) dont la teneur en substances parasites est moindre que celle du flux d'arrivée gagnant cette cellule de flottation, et
des substances chimiques étant ajoutées afin d'améliorer l'effet de flottation,
**caractérisé par le fait**
**que** les substances chimiques (7, 8, 9) sont ajoutées à la suspension (S, S') de fibres de papier en au moins deux zones d'adjonction agencées en succession dans la direction de circulation de ladite suspension (S) de fibres de papier, et présentent alors respectivement des pourcentages différents en composants chimiques.

2. Procédé selon la revendication 1,
**caractérisé par le fait**
**qu'**une aération de la suspension (S) de fibres de papier a lieu, entre deux zones d'adjonction, en vue de former les bulles gazeuses.

3. Procédé selon la revendication 2,
**caractérisé par le fait**
**que** le premier ajout de substances chimiques a lieu avant ou pendant la dissolution (6) au cours de laquelle la suspension aqueuse (S) de fibres de papier est produite.

4. Procédé selon la revendication 2 ou 3,
**caractérisé par le fait**
**qu'**un ajout de substances chimiques, ne constituant pas le premier ajout, a lieu dans une cellule de flottation située en aval de la première cellule de flottation (1), au plus tard dans la dernière cellule de flottation (5).

5. Procédé selon l'une des revendications précédentes,
**caractérisé par le fait**
**qu'**un composant chimique agit comme un collecteur.

6. Procédé selon la revendication 5,
**caractérisé par le fait**
**que** le composant collecteur est du savon ou un acide gras.

7. Procédé selon l'une des revendications précédentes,
**caractérisé par le fait**
**qu'**un composant chimique amplifie la formation de mousse de flottation.

8. Procédé selon la revendication 7,
**caractérisé par le fait**
**que** le composant, amplifiant la formation de mousse de flottation, est un tensioactif.

9. Procédé selon l'une des revendications précédentes,
**caractérisé par le fait**
**qu'**un composant chimique favorise la dissociation des substances parasites d'avec les fibres de papier.

10. Procédé selon l'une des revendications précédentes,
**caractérisé par le fait**
**qu'**un composant chimique favorise le gonflement des fibres de papier.

11. Procédé selon l'une des revendications précédentes,
**caractérisé par le fait**
**qu'**il est ajouté avec les substances chimiques (8, 9), dans une zone d'adjonction située en aval, une plus petite quantité de substances chimiques collectrices que celle ajoutée, avec les substances chimiques (7, 8), dans une zone d'adjonction située en amont de la zone précitée.

12. Procédé selon l'une des revendications précédentes,
**caractérisé par le fait**
**qu'**il est ajouté avec les substances chimiques (8, 9), dans une zone d'adjonction située en aval, une plus grande quantité d'agents moussants que celle ajoutée, avec les substances chimiques (7, 8), dans une zone d'adjonction située en amont de la zone précitée.

13. Procédé selon l'une des revendications précédentes,
**caractérisé par le fait**
**qu'**un flux épuré de matière finie (A1, A2, A3, A4, A5) est prélevé d'une cellule de flottation (1, 2, 3, 4, 5), puis renvoyé vers une cellule de flottation (1, 2, 3, 4, 5) par l'intermédiaire d'une pompe (12).

14. Procédé selon la revendication 13,
**caractérisé par le fait**
**que** le flux de matière finie (A1, A2, A3, A4) est de nouveau aéré, puis réinjecté dans la cellule de flottation (1, 2, 3, 4, 5) dont il a été prélevé.

15. Procédé selon la revendication 13,
**caractérisé par le fait**
**que** le flux de matière finie (A1, A2, A3, A4) d'une cellule de flottation (1, 2, 3, 4) est refoulé, par l'intermédiaire d'une pompe (12), dans la cellule de flottation (2, 3, 4, 5) située en aval.

16. Procédé selon la revendication 13, 14 ou 15,
**caractérisé par le fait**
**que** la cellule de flottation (1, 2, 3, 4, 5) présente une tubulure mélangeuse (13) munie d'un injecteur ; et par le fait que le flux de matière finie (A1, A2, A3, A4, A5) est introduit dans ladite tubulure mélangeuse (13).

17. Procédé selon l'une des revendications précédentes,
**caractérisé par le fait**
**que** les cellules de flottation forment au moins deux étages de flottation, et par le fait que la mousse de flottation, accumulée dans un étage de flottation, est admise dans l'étage de flottation suivant, et par le fait que des substances chimiques, présentant des composants spécifiquement coordonnés avec le second étage de flottation, sont ajoutées dans cet étage également.

18. Procédé selon l'une des revendications précédentes,
**caractérisé par le fait**
**que** les substances parasites à éliminer sont des particules d'encre d'impression.

19. Procédé selon l'une des revendications précédentes,
**caractérisé par le fait**
**que** les substances parasites à éliminer sont des particules collantes, c'est-à-dire des *stickies.*
